# EUROPÄISCHE PATENTSCHRIFT

(11) **EP 2 549 242 B1**
(45) Veröffentlichungstag und Bekanntmachung des Hinweises auf die Patenterteilung: **11.05.2016**
(21) Anmeldenummer: 12005127.1
(22) Anmeldetag: 11.07.2012
(51) Int. Cl.: G01D 5/48

(54) **Vorrichtung zur Positionsermittlung mittels eines magnetostriktiven Sensorsystems**
Device for determining position by means of a magnetostrictive sensor system
Dispositif destiné à déterminer la position au moyen d'un système de capteur magnétostrictif

(30) Priorität: 15.07.2011 DE 102011107287
(43) Veröffentlichungstag der Anmeldung: 23.01.2013
(73) Patentinhaber: Hydac Electronic GmbH, 66128 Saarbrücken (DE)
(72) Erfinder: Heuckelbach, Rainer, 58513 Lüdenscheid (DE)
(74) Vertreter: Bartels & Partner

(56) Entgegenhaltungen:
- EP-A1- 0 683 887
- EP-A1- 1 464 925
- US-A- 4 319 189
- US-A1- 2001 052 772
- US-A1- 2003 197 502

## Beschreibung

Die Erfindung betrifft eine Vorrichtung gemäß der Merkmalsausgestaltung des Oberbegriffes des Patentanspruches 1.

Magnetostriktive Messverfahren dieser Art sind Stand der Technik. Mit Vorteil werden diese Verfahren im Bereich der berührungslosen Positionsmessung von Maschinenteilen eingesetzt, beispielsweise zur Ermittlung von Kolbenpositionen innerhalb von Zylindern oder anderen beweglichen Maschinenelementen (US 2003/0197502 A1).

So offenbart die US 2003/0197502 A1 eine Vorrichtung für die Positionsermittlung mittels eines magnetostriktiven Sensorsystems, bei dem der sich entlang einer Messstrecke erstreckende magnetostriktive Wellenleiter nahe seinem einen Ende einen Detektor aufweist. An dem über den Detektor hinausragenden kurzen Abschnitt des Wellenleiters und in einem Abstand von ungefähr der halben Wellenlänge der Körperschallwelle ist eine Signalreflektoreinrichtung in Form einer Knickstelle des Wellenleiters vorgesehen. Der längere Abschnitt des Wellenleiters ist mit einem Positionselement versehen und an seinem freien Ende von einem Dämpfungselement umgeben, um Störungen der Messung durch Reflexionen an diesem Ende des Wellenleiters abzuschwächen. Bei der bekannten Lösung soll durch die Überlagerung des von dem Positionselement in Richtung des Detektors laufenden Antwortimpulses mit der Reflexion desselben an der dem Detektor benachbarten Knickstelle ein verbessertes Signal für die Detektierung erreicht sein.

Durch das berührungslose Messprinzip arbeiten solche Systeme völlig verschleißfrei, woraus eine lange Lebensdauer der Sensoren resultiert. Wenn die magnetostriktive Wegmessung für sicherheitsrelevante Anwendungen benutzt wird, aus der großen Anzahl derartiger Anwendungen sei beispielhaft lediglich die Wegmessung von Sicherheitskomponenten mobiler Arbeitsgeräte angesprochen, etwa von Last-Abstützelementen, können Fehlmessungen zu gefährlichen Situationen führen.

Eine mögliche Ursache für Fehlmessungen bei derartigen magnetostriktiven Systemen besteht darin, dass die Körperschallwelle vom Entstehungsort an der Messstelle nicht nur zum Detektor, sondern auch zum Ende der Messstrecke hin verläuft, vom Ende des Wellenleiters her zum Detektor zurück reflektiert wird und im Detektor einen Störimpuls erzeugt. Um die Gefahr zu minimieren, dass durch die reflektierte Körperschallwelle eine Fehlmessung erfolgt, kommen im Stand der Technik am Ende des Wellenleiters Dämpfungseinrichtungen zum Einsatz, siehe hierzu US-Patent 5,545,984, die die Reflexion der Körperschallwelle abschwächen.

So weist auch die aus der US 2001/0052772 A1 bekannte Vorrichtung am vom Detektor entfernten, anderen Ende des Wellenleiters eine Dämpfungseinrichtung auf, um Störimpulse abzuschwächen. Bei der bekannten Lösung ragt der Wellenleiter ein Stück über die Dämpfungseinrichtung hinaus und ist dort mittels einer Löt- oder Crimpverbindung mit einem elektrischen Rückleiter verbunden, über den der anregende elektrische Impuls zurückgeleitet wird.

Bei der aus der EP 1 464 925 A1 bekannten Vorrichtung ist vorgesehen, die Verbindung zwischen Wellenleiter und Rückleiter am freien anderen, vom Detektor distalen Ende des Wellenleiters über eine Kontaktklemme mit dem Wellenleiter zu verbinden. Auch bei dieser Lösung ist zur Vermeidung von Störimpulsen eine Dämpfungseinrichtung der Kontaktklemme vorgelagert.

Abgesehen davon, dass für Dämpfungsmaßnahmen ein konstruktiver Aufwand getrieben werden muss, ist nicht ausgeschlossen, dass durch verbleibende, abgeschwächte Reflexionen dennoch Fehlmessungen zustande kommen können.

Um diesen Nachteilen zu begegnen, ist in der EP 0 683 887 B1 bereits eine gattungsgemäße Vorrichtung für die Positionsermittlung mittels eines magnetostriktiven Sensorsystems vorgeschlagen, mit einem sich entlang einer Messstrecke erstreckenden magnetostriktiven Wellenleiter, einem an einem Ende des Wellenleiters befindlichen Detektor, einem entlang der Messstrecke bewegbaren, ein Magnetfeld erzeugenden Positionselement, einer dem Detektor zugeordneten Einrichtung, um im Wellenleiter einen elektrischen Impuls zu erzeugen, der an dem magnetostriktiven Wellenleiter eine mechanische Verformung oder Bewegung bewirkt, die eine im Wellenleiter laufende Körperschallwelle erzeugt, und mit einer dem Detektor zugehörigen Elektronik, die aufgrund der Laufzeit der Körperschallwelle vom Positionselement zum Detektor die Lage des Positionselements als Position der Messstelle berechnet, wobei am anderen Ende der Messstrecke eine Signalreflektoreinrichtung am Wellenleiter vorgesehen ist, wobei die Elektronik des Detektors für die Positionsberechnung die Laufzeit der von der Signalreflektoreinrichtung zum Detektor reflektierten Körperschallwelle berücksichtigt, und wobei die Signalreflektoreinrichtung ein Verbindungselement aufweist, mittels dessen ein elektrischer Rückleiter am freien Ende des Wellenleiters angeschlossen ist.

Eine vergleichbare Sensorvorrichtung ist auch aus der US 4,319,189 A bekannt, die insbesondere dem Fachmann aufzeigt, mittels eines Impulswandlers einer einem Detektor zugehörigen Elektronik die Antwortimpulse in elektrische Antwortsignale umzuwandeln, um die innerhalb eines Messzyklus zeitversetzt auftretenden Antwortsignale bei Übereinstimmungen hinsichtlich Signalform und -dauer mittels einer Triggerschaltung als das erste und das zweite Antwortsignal zu erkennen, wobei die Elektronik insbesondere in Form eines Mikrocontrollers ausgebildet die jeweilige Laufzeitmessungen anhält.

Allen bekannten Lösungen ist gemeinsam, dass sie konstruktiv relativ kompliziert aufbauen und insbesondere im Bereich der Signalreflektoreinrichtung von der Funktionssicherheit und der Messgenauigkeit her Wünsche offen lassen. Demgemäß konnten sich die bekannten Lösungen im Sinne eines vielfältig einsetzbaren Massenartikels auf dem Markt bisher nicht behaupten und wurden immer nur für spezielle technische Sonderanwendungsfälle regelmäßig eingesetzt.

Im Hinblick hierauf liegt der Erfindung die Aufgabe zugrunde, eine gattungsgemäße Vorrichtung dergestalt weiter zu verbessern, dass bei verringertem baulichen Aufwand und mithin bei niedrigen Kosten ein Höchstmaß an Funktionssicherheit erreichbar ist, so dass sich die erfindungsgemäße Vorrichtungslösung auch im Sinne eines Massen- oder Serienbauteils vermehrt in verschiedensten Anwendungsgebieten einsetzen lässt. Diese Aufgabe wird durch eine Vorrichtung mit der Gesamtheit aller Merkmale des Patentanspruches 1 gelöst.

Gemäß dem kennzeichnenden Teil des Patentanspruches 1 besteht die wesentliche Besonderheit der erfindungsgemäßen Vorrichtungslösung darin, dass die angesprochene Signalreflektoreinrichtung aus einer am anderen Ende der Messstrecke befindlichen Knickstelle des Wellenleiters gebildet ist.

Demgemäß lässt sich die Signalreflektoreinrichtung mit einfachsten konstruktiven Mitteln, wie einem metallischen Crimp und/oder einer Knickstelle im Wellenleiter erzeugen und es ist für einen Durchschnittsfachmann auf dem Gebiet der Vorrichtung für die Positionsermittlung mittels eines magnetostriktiven Sensorsystems überraschend, dass er trotz dieser konstruktiv einfach zu erhaltenden Gestaltungen in ausgesprochen hohem Maße die Funktionsfähigkeit der Signalreflektoreinrichtung sicherstellt.

Des Weiteren lässt sich die erfindungsgemäße Vorrichtung für eine Vielzahl neuer Anwendungsbereiche einsetzen, da insbesondere die angesprochene Crimp-Lösung als Verbindungselement sowie die Knickstelle sich bauraumsparend in bestehende Vorrichtungen unterbringen lassen. Mit der erfindungsgemäßen Vorrichtung ist ein Massen- oder Serienbauteil realisiert, das als Standardware sich an eine Vielzahl von Anwendungsfällen in der Praxis anpassen lässt.

Des Weiteren ist vorzugsweise vorgesehen, dass zumindest ein eingesetzter Crimp als Verbindungselement den elektrischen Rückleiter mit dem Wellenleiter verbindet. Demgemäß kann ein als Verbindungselement dienender Crimp ausschließlich die Signalreflektoreinrichtung bilden; es besteht aber auch die Möglichkeit, die Crimp-Verbindung als Verbindungselement um ein weiteres Crimp-Element zu ergänzen, das bevorzugt auf dem Wellenleiter angeordnet im Bereich des Verbindungselementes als Störfunktionselement und somit als Reflektor dient. In Abhängigkeit der konstruktiven Crimp-Gestaltung ist es insoweit auch denkbar, durch mehrere in Reihe hintereinander angeordneter Crimp-Elemente eine Abstufung der beabsichtigten Stör- oder Reflexionsfunktion zu erreichen.

Besonders vorteilhaft lässt sich die erfindungsgemäße Vorrichtung dadurch einsetzen, dass die Reflexion am Ende der Messstrecke, gebildet durch die erfinderisch ausgestaltete Signalreflektoreinrichtung, nicht nur zugelassen wird, wodurch der Aufwand für Dämpfungseinrichtungen insgesamt entfällt, sondern dass die Reflexion aktiv genutzt wird, um bei jedem Messzyklus eine Diagnose der Positionsberechnung durchzuführen. Zu diesem Zweck kann der Umstand ausgenutzt werden, dass die Summe aus der Laufzeit der Körperschallwelle von der Positionsstelle zum Detektor und der Laufzeit der von der Positionsstelle zu einer Reflexionsstelle am Ende der Messstrecke verlaufenden und von dort zum Detektor mittels der speziell ausgestalteten Signalreflektoreinrichtung zurückreflektierten Körperschallwelle genau der doppelten Länge der Messstrecke entspricht. Wenn also innerhalb eines Messzyklus diese Bedingung durch ein erstes Antwortsignal (unreflektiert) und ein zweites, hierzu zeitversetztes Antwortsignal (reflektiert) erfüllt ist, ist absolut sichergestellt, dass die Positionsberechnung nicht durch ein Störsignal verfälscht ist und dementsprechend die auf dem ersten Antwortsignal beruhende Positionsberechnung fehlerfrei ist. Es hat sich ferner gezeigt, dass die Crimp- oder Knickstellen-Lösung für die Signalreflektoreinrichtung besonders sicher etwaig auftretenden Störsignalen entgegenwirkt.

Vorzugsweise ist vorgesehen, dass mittels eines Impulswandlers einer dem Detektor zugehörigen Elektronik die Antwortimpulse in elektrische Antwortsignale gewandelt werden und dass die innerhalb eines Messzyklus zeitversetzt auftretenden Antwortsignale bei Übereinstimmungen hinsichtlich Signalform und -dauer mittels einer Triggerschaltung als das erste und das zweite Antwortsignal erkannt und einem Mikrocontroller zugeführt werden, der die Laufzeitmessungen anhält.

Hinsichtlich der Ausbildung der Signalreflektoreinrichtung kann weiter bevorzugt vorgesehen sein, dass am Ende der Messstrecke ein auf dem Wellenleiter befindlicher Störkörper angeordnet ist, der bevorzugt durch einen weiteren metallischen Crimp gebildet sein kann. Ein derartiger metallischer Störkörper kann auf einfache Weise an genaue vorbestimmte Positionen auf dem Wellenleiter angebracht werden und als eine Art Kompensationsstörung etwaig auftretenden Störsignalen entgegenwirken.

Für einen störsicheren Betrieb hat es sich auch als vorteilhaft erwiesen, sowohl den Wellenleiter als auch die elektrische Rückleitung gemeinsam in einen Isolierkörper, insbesondere in einem Isolierschlauch zu führen, wobei weiter bevorzugt vorgesehen ist, dass der angesprochene Störkörper als Signalreflektoreinrichtung zwischen dem Ende des Isolierschlauches und der Crimp-Verbindung sich stationär angeordnet auf dem Wellenleiter befindet.

Nachstehend ist die Erfindung anhand von in der Zeichnung dargestellten Ausführungsbeispielen im Einzelnen erläutert. Es zeigen:
- Fig. 1: eine skizzenhafte Darstellung zur Veranschaulichung des Funktionsablaufs der mit der erfindungsgemäßen Vorrichtung durchführbar ist;
- Fig. 2: eine abgebrochen gezeichnete, perspektivische Schrägansicht lediglich eines Endbereichs der Messstrecke eines Ausführungsbeispiels der erfindungsgemäßen Vorrichtung; und
- Fig. 3 und 4: der Fig. 2 ähnliche Darstellungen zweier weiterer Ausführungsbeispiele der Vorrichtung.

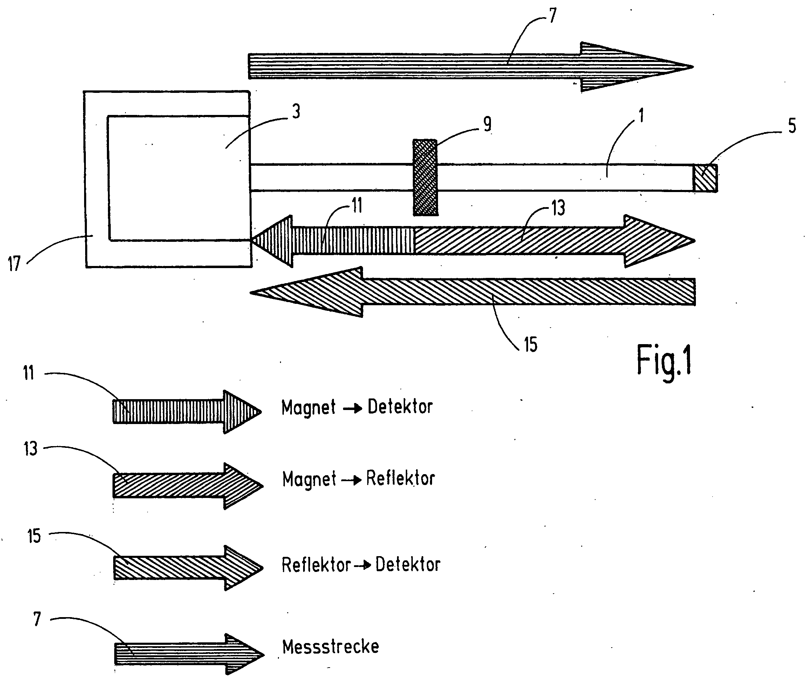

In der schematisierten Darstellung von Fig. 1 ist ein magnetostriktiver Wellenleiter mit 1 bezeichnet, an dessen einem Ende sich ein Detektor 3 befindet. Am anderen Ende des Wellenleiters 1, und zwar in einem der Länge der Messstrecke entsprechenden Abstand vom Detektor 3, befindet sich auf dem Wellenleiter 1 eine Reflektoreinrichtung 5. Ein Pfeil 7 verdeutlicht die Länge der Messstrecke. Innerhalb dieser Messstrecke 7 ist ein Positionselement in Form eines Permanentmagneten 9 bewegbar, der bei einem vom Detektor 3 generierten Stromimpuls im Wellenleiter 1 die Körperschallwelle erzeugt, die sich auf dem Wellenleiter 1 vom Magnet 9 mit Ultraschallgeschwindigkeit zum Detektor 3 hin sowie vom Magnet 9 zur Reflektoreinrichtung 5 bewegt, von wo die Körperschallwelle zum Detektor 3 zurück reflektiert wird. Die jeweiligen Laufzeiten sind mit Pfeilen 11, 13 und 15 verdeutlicht, wobei der Pfeil 11 der Laufzeit zwischen Magnet 9 und Detektor 3, der Pfeil 13 der Laufzeit zwischen Magnet 9 und Reflektoreinrichtung 5 und der Pfeil 15 der Laufzeit zwischen Reflektoreinrichtung 5 und Detektor 3 entspricht.

Die im Detektor 3 enthaltene Impulswandlereinrichtung generiert aus dem eintreffenden Antwortimpuls der dem Pfeil 11 entsprechenden Laufzeit einen ersten elektrischen Antwortimpuls und aus dem zeitversetzten zweiten Antwortimpuls, der den summierten Laufzeiten der Pfeile 13 und 15 entspricht, einen zweiten elektrischen Antwortimpuls, die in einem Mikrokontroller 17 verarbeitet werden. Dieser berechnet die Position des Magneten 9 unter der Bedingung, dass eine der Elektronik 17 des Detektors 3 zugehörige Triggerschaltung erkennt, dass die Summe der Laufzeiten von erstem und zweitem Antwortsignal gleich der Laufzeit für die doppelte Länge der Messstrecke 7 ist, wenn also die Bedingung erfüllt ist, dass entsprechend der Darstellung von Fig. 1 die aneinandergereihten Längen der die Laufzeiten darstellenden Pfeile 11, 13 und 15 der doppelten Länge des Pfeiles 7 entsprechen, der die Länge der Messstrecke darstellt.

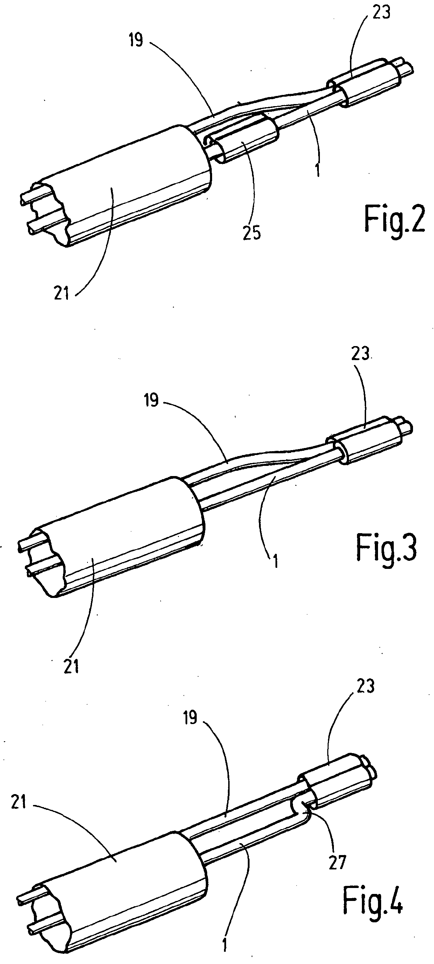

Die Fig. 2 bis 4 zeigen drei verschiedene Ausführungsformen der erfindungsgemäßen Vorrichtung zur Durchführung des erfindungsgemäßen Verfahrens, wobei sich die Ausführungsformen durch unterschiedliche Ausbildung der Reflektoreinrichtung unterscheiden. Die Fig. 2 bis 4 zeigen jeweils lediglich den Bereich der Vorrichtung, der dem Ende des Wellenleiters 1 benachbart ist. Bei sämtlichen dieser Beispiele sind der Wellenleiter 1 sowie ein für die Erzeugung eines den Messzyklus auslösenden Stromimpulses im Wellenleiter 1 vorgesehener Rückleiter 19 von einer Hülle in Form eines Isolierschlauches 21 umgeben, von dem in Fig. 2 bis 4 lediglich ein Längenabschnitt gezeigt ist. Bei sämtlichen Beispielen ist der Rückleiter 19 mittels eines metallischen Crimp 23 am Wellenleiter 1 angeschlossen.

Beim Ausführungsbeispiel von Fig. 2 ist die Reflektoreinrichtung 5 durch einen das Ende der Messstrecke definierenden Störkörper in Form eines weiteren metallischen Crimp 25 gebildet. Bei dem Ausführungsbeispiel von Fig. 3 bildet der Crimp 23 für den Anschluss des Rückleiters 19 in Doppelfunktion sowohl den als Reflektoreinrichtung dienenden, die Messstrecke begrenzenden Störkörper als auch die Anschlusseinrichtung des Rückleiters 19. Bei dem Ausführungsbeispiel von Fig.4 bildet eine Knickstelle 27, die im Wellenleiter 1 selbst ausgebildet ist, einen Störkörper, der als Reflektoreinrichtung wirksam ist und das Ende der Messstrecke definiert. Sofern von Crimp 23, 25 oder Crimp-Elementen die Rede ist, meint dies vorzugsweise einen flachen metallischen Flächenzuschnitt, der in bevorzugter Rechteckform ausgebildet mit nach innen eingebördelten Endrändern versehen wird, die bevorzugt im Querschnitt gesehen kreiszylindrisch ausgebildete Aufnahmekanäle für den Wellenleiter 1 sowie für den elektrischen Rückleiter 19 bilden. Mit einer üblichen Clip- oder Crimp-Zange oder mit sonstigen Zustellwerkzeugen lassen sich die Querschnitte der Aufnahmekanäle derart verengen, dass eine sichere Klemmaufnahme für das Ende des Wellenleiters 1 als auch für das Ende des Rückleiters 19 geschaffen ist. Sofern die benachbart gegenüberliegenden Enden des Flächenzuschnitts im eingebördelten oder eingerundeten Zustand miteinander in Anlage kommen und auf der Oberseite des Flächenzuschnittes stirnseitig aufstehen oder endseitig zumindest teilweise die freien Enden von Wellenleiter 1 und Rückleiter 19 umschließen oder umfassen, ist darüber hinaus eine sichere Lageentkopplung von Wellenleiter 1 zu Rückleiter 19 erreicht.

## Patentansprüche

1. Vorrichtung für die Positionsermittlung mittels eines magnetostriktiven Sensorsystems, mit einem sich entlang einer Messstrecke erstreckenden magnetostriktiven Wellenleiter (1), einem an einem Ende des Wellenleiters befindlichen Detektor (3), einem entlang der Messstrecke bewegbaren, ein Magnetfeld erzeugenden Positionselement (9), einer dem Detektor (3) zugeordneten Einrichtung (19), um im Wellenleiter (1) einen elektrischen Impuls zu erzeugen, der an dem magnetostriktiven Wellenleiter (1) eine mechanische Verformung oder Bewegung bewirkt, die eine im Wellenleiter (1) laufende Körperschallwelle erzeugt, und mit einer dem Detektor (3) zugehörigen Elektronik (17), die aufgrund der Laufzeit der Körperschallwelle vom Positionselement (9) zum Detektor (3) die Lage des Positionselements (9) als Position der Messstelle berechnet, wobei am anderen Ende der Messstrecke eine Signalreflektoreinrichtung (5) am Wellenleiter (1) vorgesehen ist, wobei die Elektronik (17) des Detektors (3) für die Positionsberechnung die Laufzeit der von der Signalreflektoreinrichtung (5) zum Detektor reflektierten Körperschallwelle berücksichtigt, und wobei die Signalreflektoreinrichtung (5) ein Verbindungselement aufweist, mittels dessen ein elektrischer Rückleiter (19) am freien Ende des Wellenleiters (1) angeschlossen ist, **dadurch gekennzeichnet, dass** die Signalreflektoreinrichtung (5) aus einer am anderen Ende der Messstrecke befindlichen Knickstelle (27) des Wellenleiters (1) gebildet ist.

2. Vorrichtung nach Anspruch 1, in welcher zumindest ein eingesetzter Crimp (23) als Verbindungselement den elektrischen Rückleiter (19) mit dem Wellenleiter (1) verbindet.

3. Vorrichtung nach Anspruch 1 oder 2, in welcher innerhalb eines jeweiligen, durch einen von der dem Detektor (3) zugeordneten Einrichtung (19) erzeugten Startimpuls eingeleiteten Messzyklus ein von einer reflektierten Körperschallwelle herrührender zweiter Antwortimpuls einer Reflexionsstelle in Form der Signalreflektoreinrichtung (5) am anderen Ende der Messstrecke erzeugbar ist, der eine zweite Laufzeit zwischen der Messstelle in Form des Positionselementes (9), der Reflexionsstelle in Form der Signalreflektoreinrichtung (5) am anderen Ende der Messstrecke und von dieser zum Detektor (3) zurück darstellt, und in welcher die Berechnung der Position des Positionselementes (9) mittels der Elektronik (17) als richtig erkannt wird, wenn die Summe der beiden Laufzeiten der doppelten Länge der Messstrecke entspricht.

4. Vorrichtung nach einem der vorhergehenden Ansprüche, in welcher mittels eines Impulswandlers der dem Detektor (3) zugehörigen Elektronik (17) die Antwortimpulse des Positionselements (9) und der Signalreflektoreinrichtung (5) in elektrische Antwortsignale wandelbar sind und in welcher die innerhalb eines Messzyklus zeitversetzt auftretenden Antwortsignale des Positionselements (9) und der Signalreflektoreinrichtung (5) bei Übereinstimmungen hinsichtlich Signalform und -dauer mittels einer Triggerschaltung als das erste und das zweite Antwortsignal erkennbar sind und der Elektronik (17), vorzugsweise in Form eines Mikrokontrollers zugeführt werden, der die Laufzeitmessungen anhält.

5. Vorrichtung nach einem der vorhergehenden Ansprüche, in welcher der Wellenleiter (1) und der elektrische Rückleiter (19) gemeinsam von einem Isolierschlauch (21) umgeben sind.

6. Vorrichtung nach Anspruch 2 oder einem der vorhergehenden Ansprüche 3-5 wenn abhängig von Anspruch 2, in welcher die Signalreflektoreinrichtung (5) einen am anderen Ende der Messstrecke auf dem Wellenleiter (1) befindlichen Störkörper, vorzugsweise in Form eines weiteren metallischen Crimp (25), aufweist.

7. Vorrichtung nach Anspruch 6, in welcher sich der weitere Crimp (25) als Störkörper oder Signalreflektoreinrichtung (5) zwischen dem Ende des Isolierschlauches (21) und dem als Verbindung dienenden Crimp (23) befindet.

## Claims

1. A device for determining position by means of a magnetostrictive sensor system that has a magnetostrictive waveguide (1) extending along a measuring section, a detector (3) located at one end of the waveguide, a position element (9) generating a magnetic field and that can be moved along the measuring section, a device (19) assigned to the detector (3) in order to generate an electrical pulse in the waveguide (1) that brings about mechanical deformation or movement on the magnetostrictive waveguide (1), which deformation or movement generates a continuous body sonic wave in the waveguide (1), and that has electronics (17) assigned to the detector (3), which electronics calculate the location of the position element (9) as the position of the measuring point on the basis of the running time of the body sonic wave from the position element (9) to the detector (3), a signal reflector device (5) being provided on the waveguide (1) on the other end of the measuring section, the electronics (17) of the detector (3) taking into account the running time of the body sonic wave reflected from the signal reflector device (5) to the detector for the position calculation, and the signal reflector device (5) having a connection element by means of which an electrical return conductor (19) is connected on the free end of the waveguide (1), **characterised in that** the signal reflector device (5) is formed by a kink (27) in the waveguide (1) that is located on the other end of the measuring section.

2. The device according to Claim 1, in which at least one crimp (23) that is used as a connection element connects the electrical return conductor (19) to the waveguide (1).

3. The device according to Claim 1 or 2, in which within a respective measuring cycle initiated by a starting pulse generated by the device (19) assigned to the detector (3) a second response pulse of a reflection point deriving from a reflected body sonic wave and in the form of the signal reflector device (5) at the other end of the measuring section can be generated which represents a second running time between the measuring point in the form of the position element (9), the reflection point in the form of the signal reflector device (5) at the other end of the measuring section, and from the latter back to the detector (3), and in which the calculation of the position of the position element (9) is acknowledged as correct by means of the electronics (17) if the sum of the two running times corresponds to twice the length of the measuring section.

4. The device according to any of the preceding claims, in which the response pulses of the position element (9) and the signal reflector device (5) can be converted into electrical response signals by means of a pulse converter of the electronics (17) associated with the detector (3) and in which the response signals of the position element (9) and the signal reflector device (5) occurring, with a time delay, within a measuring cycle, can be identified by means of a trigger circuit as the first and the second response signal if there are correspondences with regard to the shape and duration of the signal, and are delivered to the electronics (17), preferably in the form of a microcontroller which stops the running time measurements.

5. The device according to any of the preceding claims, in which the waveguide (1) and the electrical return conductor (19) are together surrounded by an insulating tube (21).

6. The device according to Claim 2 or any of the preceding Claims 3-5, if dependent upon Claim 2, in which the signal reflector device (5) has an interfering body located on the waveguide (1) at the other end of the measuring section, preferably in the form of another metallic crimp (25).

7. The device according to Claim 6, in which the additional crimp (25) as an interfering body or signal reflector device (5) is located between the end of the insulating tube (21) and the crimp (23) serving as a connection.

## Revendications

1. Dispositif de détermination de position au moyen d'un système de capteur magnétostrictif, comprenant un guide d'ondes (1) magnétostrictif s'étendant le long d'une section de mesure, un détecteur (3) se trouvant l'extrémité du guide d'ondes, un élément (9) de position mobile le long de la section de mesure et produisant un champ magnétique, un dispositif (19) associé au détecteur (3) pour produire, dans le guide d'ondes (1), une impulsion électrique, qui provoque, sur le guide d'ondes (1) magnétostrictif, une déformation mécanique ou un déplacement produisant une onde émanant d'un corps solide et se propageant dans le guide d'ondes (1), et comprenant une électronique (17), qui fait partie du détecteur (3) et qui, sur la base du temps de parcours de l'onde émanant d'un corps solide de l'élément (9) de position au détecteur, calcule la position de l'élément (9) de position comme position du point de mesure, un dispositif (5) de réflexion d'un signal étant prévu sur le guide d'ondes (1) à l'autre extrémité de la section de mesure, l'électronique (17) du détecteur (3) prenant en compte, pour le calcul de position, le temps de propagation de l'onde émanant d'un corps solide réfléchi du dispositif (5) de réflexion du signal au détecteur et dans lequel le dispositif (5) de réflexion du signal a un élément de liaison, au moyen duquel un conducteur (19) électrique de retour est raccordé à l'extrémité libre du guide d'ondes (1), **caractérisé en ce que** le dispositif (5) de réflexion d'un signal est formé d'un coude (27) du guide d'ondes (1) se trouvant à l'autre extrémité de la section de mesure.

2. Dispositif suivant la revendication 1, dans lequel au moins un sertissage (3) inséré comme élément de liaison relie le conducteur (19) électrique de retour au guide d'ondes (1).

3. Dispositif suivant la revendication 1 ou 2, dans lequel, dans un cycle de mesure lancé par une impulsion de début produite par le dispositif (19) associé au détecteur (3), une deuxième impulsion de réponse, provenant d'une onde réfléchie émanant d'un corps solide, d'un point de réflexion peut être produite sous la forme du dispositif (5) de réflexion d'un signal à l'autre extrémité de la section de mesure, deuxième impulsion qui représente un deuxième temps de propagation entre le point de mesure sous la forme de l'élément (9) de position, le point de réflexion sous la forme du dispositif (5) de réflexion d'un signal à l'autre extrémité de la section de mesure et de celui-ci en retour au détecteur (3) et dans lequel le calcul de la position de l'élément (9) de position au moyen de l'électronique (17) est considéré comme juste lorsque la somme des deux temps de propagation correspond à deux fois la longueur de la section de mesure.

4. Dispositif suivant l'une des revendications précédentes, dans lequel, au moyen d'un convertisseur d'impulsion de l'électronique (17) appartenant au détecteur (3), les impulsions de réponse de l'élément (9) de position et du dispositif (5) de réflexion d'un signal peuvent être transformées en des signaux électriques de réponse et dans lequel les signaux de réponse, apparaissant de manière décalée dans le temps dans un cycle de mesure, de l'élément (9) de position et du dispositif (5) de réflexion d'un signal peuvent, s'il y a coïncidences du point de vue de la forme du signal et de la durée du signal, être, au moyen d'un circuit de déclenchement, considérés comme le premier et le deuxième signal de réponse et être envoyés à l'électronique (17), de préférence sous la forme d'une micro-unité de commande, qui conserve les mesures de temps de propagation.

5. Dispositif suivant l'une des revendications précédentes, dans lequel le guide d'ondes (1) et le conducteur (19) électrique de retour sont entourés conjointement d'une gaine (21) isolante.

6. Dispositif suivant la revendication 2 ou l'une des revendications précédentes 3 à 5 lorsqu'elle dépend de la revendication 2, dans lequel le dispositif (5) de réflexion d'un signal a un corps de perturbation se trouvant sur le guide d'ondes (1) à l'autre extrémité de la section de mesure, de préférence sous la forme d'un autre sertissage (25) métallique.

7. Dispositif suivant la revendication 6, dans lequel l'autre sertissage (25) se trouve, comme corps de perturbation ou comme dispositif (5) de réflexion d'un signal, entre l'extrémité de la gaine (21) isolante et le sertissage (23) servant de liaison.
